# EUROPEAN PATENT APPLICATION

(11) **EP 0 679 468 A1**
(43) Date of publication of application: **02.11.1995**
(21) Application number: 95400889.2
(22) Date of filing: 21.04.1995
(51) Int. Cl.: B23K 11/30

(54) **Self-cleaning rotary tool for dressing welding electrodes**

(30) Priority: 22.04.1994 CA 2121977
(71) Applicant: 3016030 CANADA INC., Montréal, Quebec H3A 2R7 (CA)
(72) Inventor: Voilmy,Laurent, F-95000 Cergy (FR); Rigaux,Didier, F-27120 Houlbec-Cocherel (FR)
(74) Representative: Tanguy, Gilbert André

(57) **Abstract**

A self-cleaning rotary tool for dressing welding electrodes. The tool comprises a hollow generally cylindrical body receiving a planar blade member for rotation therewith. The blade member has a pair of cutting edges slightly recessed relative to respective longitudinal end portions of the tool body and capable of simultaneously re-surfacing a pair of welding electrodes in opposed relationship. The planar blade member and the inner walls of the tool body form a pair continuous coextensive channels for discharging metal chips produced during the electrode machining operation, thereby preventing the tool from becoming clogged after performing multiple electrode dressing cycles.

## Description

### FIELD OF THE INVENTION

The invention relates to a tool for restoring worn-out welding electrodes to an original surface configuration. The tool is characterized by its ability to eliminate metal chips used during the machining operation to avoid clogging its working parts after performing multiple electrode dressing cycles.

### BACKGROUND OF THE INVENTION

The industry makes extensive use of automatic resistance welding machines for assembling metallic sheet panels by spot-welding. A typical welding machine includes a pair of electrodes mounted on cooperating jaws that clamp the sheet panels to be joined against one another. The electric current then established between the electrodes locally elevates the temperature of the metal to produce a spot-weld. In automated production lines, the electrodes are usually displaced by computer controlled actuators programmed to perform a predetermined welding sequence in accordance with the shape of the metallic parts to be joined.

After a number of welding cycles, the electrode tips may become fouled and must then be re-surfaced in order to maintain consistent welding properties. The electrode dressing operation is performed by a rotary tool that removes a small amount of metallic material at the tip of the electrode in order to restore the surface that contacts the workpiece to be welded to an original configuration.

The electrode dressing tool is normally installed at a service station in proximity to the welding machine. After performing a preset number of spot-welds, the machine is programmed to execute a maintenance routine which consists of engaging the electrodes in the rotary tool so that they are re-surfaced. However, the metal chips produced during the machining operation are allowed to accumulate in the tool which eventually becomes clogged and must be cleaned.

In an attempt to provide prior art electrode dressing tools with self-cleaning capability, it has been suggested to install near the tool a nozzle directing a high velocity air jet at the tool cavity in which the metal chips accumulate so as to at least partially flush them away.

This solution has proven to be unsatisfactory for two reasons. First, the air jet is not capable of dislodging completely all the metal chips accumulated in the tool, hence the cleaning action that the air jet provides is incomplete. Secondly, the air jet device adds to the complexity and the cost of the electrode dressing equipment.

### OBJECT OF THE INVENTION

An object of this invention is a rotary tool for dressing welding electrodes that has the ability to automatically channel away the metal chips produced during the machining operation, thus allowing to perform multiple electrode dressing cycles without clogging the working parts of the tool.

### SUMMARY OF THE INVENTION

As embodied and broadly described herein, the invention provides a self-cleaning rotary tool for dressing welding electrodes, said rotary tool comprising:
- a tool body capable of rotation about a predetermined axis;
- a blade member mounted in said tool body for rotation therewith, said blade member including a cutting edge that upon rotation of said tool body is capable of machining a surface of a welding electrode in order to restore the electrode to a predetermined shape; and
- a continuous channel in said tool body extending from said cutting edge and opening at an extremity of said tool body for discharging metal chips produced during machining of the welding electrode, whereby allowing to perform multiple electrode dressing cycles without clogging said rotary tool with metal chips.

In a most preferred embodiment, the rotary tool body is a hollow cylinder in which is received a flat blade member extending along a reference plane that contains the rotation axis of the electrode dressing tool. A pair of recessed cutting edges are formed on the blade member, near the longitudinal extremities of the tool body. Upon rotation of the tool body, the cutting edges are capable of simultaneously re-surfacing two electrodes held in opposed clamping jaws of an automatic welding machine
The principal advantage of the present invention resides in the ability of the rotary tool to eliminate the metal chips and shavings so the tool always remains clean. In this respect it should be noted that, the flat blade splits the hollow cylindrical tool body in two large channels that serve the purpose of conveying the metal chips produced during the machining operation away from the cutting edge and out of the tool.

As embodied and broadly described herein, the invention also provides a self-cleaning rotary tool for dressing welding electrodes, said rotary tool comprising:
- a tool body having a hollow central portion, said tool body being capable of rotating about a predetermined axis;
- a blade member mounted within said hollow central portion for rotation with said tool body, said blade member having an extremity adjacent a longitudinal end portion of said tool body that forms a cutting edge for machining a face of a welding electrode in order to restore the electrode to a predetermined shape, said blade member defining with an internal wall of said tool body a continuous channel opening at longitudinal end portion of said tool body, said continuous channel allowing to discharge metal chips produced during machining of the welding electrode out of said tool body, whereby allowing to perform a plurality of electrode dressing cycles without clogging said rotary tool with metal chips.

### BRIEF DESCRIPTION OF THE DRAWINGS

- Figure 1 is a top plan view of a self-cleaning rotary tool constructed in accordance with the present invention;
- Figures 2 and 3 are top plan views of the rotary tool in accordance with variants;
- Figure 4 is a cross-sectional view taken along lines 4 - 4 in Figure 1;
- Figure 5 is a fragmentary highly enlarged view of the profile of a cutting edge depicted at a smaller scale in Figure 4;
- Figure 5a is a cross-sectional view taken along lines 5a - 5a in Figure 5;
- Figure 6 is a side elevational view of the tool blade removed from the tool body;
- Figure 7 is a top plan view of the tool blade shown in Figure 6;
- Figure 8 is a cross-sectional view taken along lines 8 - 8 in Figure 6;and
- Figures 9a to 9h illustrate welding electrode pairs of various configurations shown with relationship to the rotary dressing tool immediately before initiating the resurfacing operation.

### DESCRIPTION OF PREFERRED EMBODIMENTS

The present invention provides a simple yet efficient rotary tool for simultaneously dressing electrodes held in the clamping jaws of an automatic resistance welding machine. The tool is characterised by the ability to channel away metal chips and shavings produced during the electrode re-surfacing operation in order to prevent clogging of its working parts.

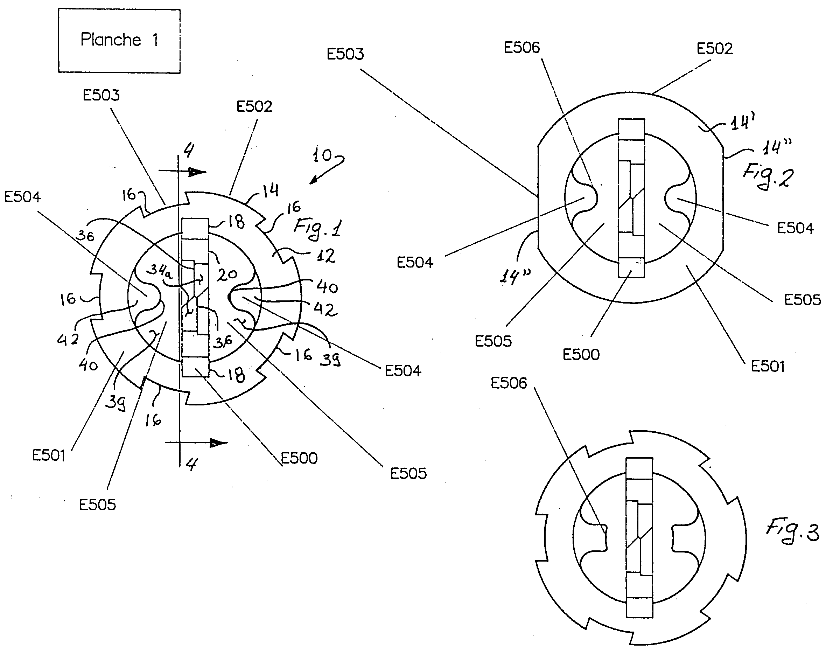

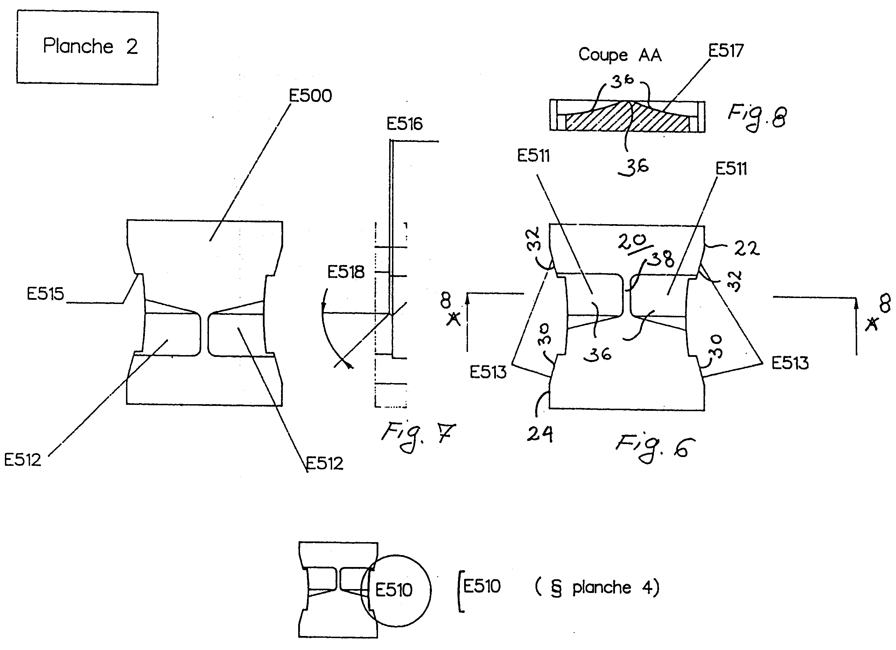

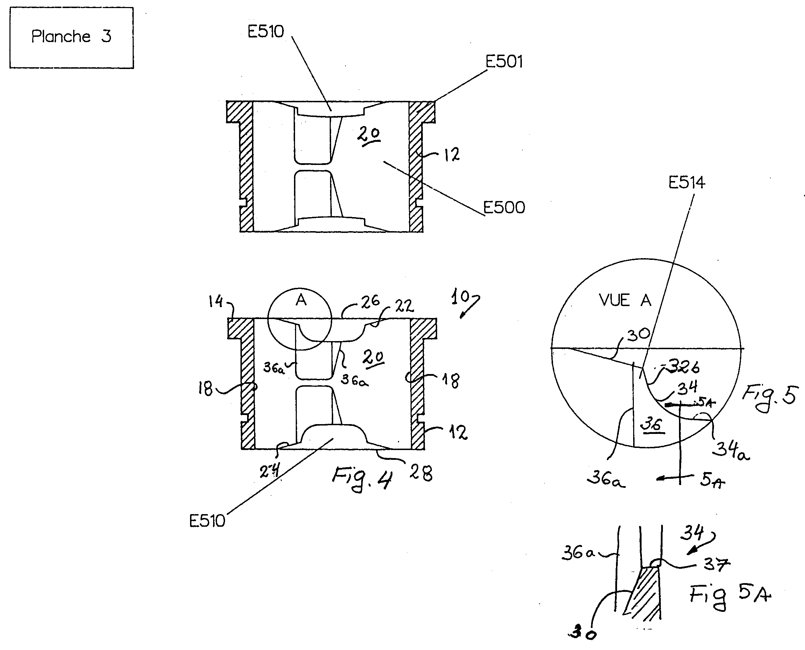

With reference to the annexed drawings, more particularly to Figures 1 and 4, the rotary tool designated comprehensively by the reference numeral 10 comprises a hollow generally cylindrical tool body 12 made of suitable material, such as hardened steel. In use, the tool body is rotated about a vertical axis by a drive assembly (not shown in the drawings). The drive assembly includes a ring-shaped part connected to a drive motor, that receives the tool 10. To lock the tool 10 to the ring-shaped part the tool body 12 is provided with a radially projecting collar 14 machined with equidistant peripheral recesses 16. The recesses mate with complementary projections (not shown in the drawings) on the ring-shaped part. It will be apparent that the configuration of the collar 14 can vary without departing from the spirit of the invention. For instance, Figure 2 illustrates a variant of the tool having a disc-shaped collar 14' truncated at opposed locations to form a pair of parallel and rectilinear segments 14''. By forming the ring-shaped part with a complementary outline, the tool 10 and the ring-shaped part can be securely matted and locked against relative rotation.

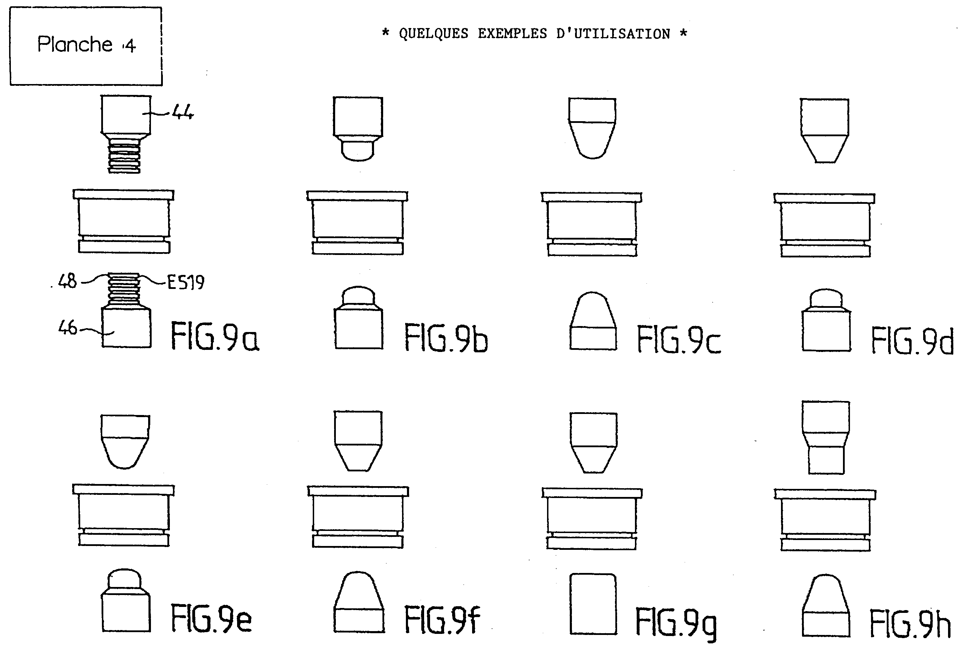

Referring now to Figures 1 and 4, the tool body 12 includes a pair of diametrally opposed U-shaped grooves 18 that receive the side edge portions of a flat blade member 20. The blade member 20 is preferably made of high-speed steel and includes symmetrical end edges 22 and 24 adjacent to respective longitudinal end portions 26 and 28 of the tool body 12. As best shown in Figure 6 each end edge 22, 24 has a pair of oblique faces 30 and 32 formed on either side of a cutting edge 34 that is recessed relative the respective longitudinal end portion of the tool body 12.

The configuration of the cutting edge 34 is depicted in Figure 5. It includes a bottom segment 34a provided for re-surfacing the tip of an electrode and upstanding side segments 32b (only one is shown in the Figure 5) that merge with the oblique faces 30, 32. The upstanding segments 32b are provided for machining the side walls of the electrode to their original configuration.

On each main face of the blade member 20 are formed a pair of bevelled surfaces 36 (see Figures 1, 5, 6 and 8) extending from respective cutting edges 34 and terminating at an apex portion 38. The lateral edges 36a (see Figure 5) form a boundary between the cutting area and the non-cutting area of the blade 20. More specifically, the edge portion contained between the lateral edges 36a of a given bevelled surface 36 constitutes the cutting edge 34, while the edge portion outside the lateral edges 36a does not remove any material from the electrode. The purpose of the bevelled surfaces 36 is to form an oblique cutting edge that reduces the amount of material removed from the electrode. Figure 5A illustrates in cross-section the cutting edge 34 which is formed between the bevelled surface 36 and a top horizontal surface 37 of the blade 20. The surfaces 36 and 37 form an obtuse angle. This cutting edge configuration reduces the amount of material removed from the electrode at each pass, i.e, each time the cutting edge sweeps the electrode tip. Accordingly, the machining operation performed by the rotary tool 10 is very fine, allowing to remove the minimum amount of material required to dress the electrode.

The blade member 20 splits the internal cavity of the tool body 12 into identical segments 39 that open at both ends of the tool body 12. The segments constitute channels for conveying out of the tool metal chips and shavings generated during the electrode machining operation.

Referring back to Figure 1, the tool body 12 includes a pair of diametrally opposed projections 40 terminating with oblique end faces 42 at each extremity of the tool 10 that have the same slope as the oblique surfaces 30, 32 on the blade member. Hence, each longitudinal extremity of the tool body 12 is provided with a four point guiding structure that will direct an electrode to be dressed toward the respective cutting edge 34, if for some reason the electrode is brought in contact with the tool 10 slightly off-center from the rotation axis of the tool 10. The distance between the pair of projections 40 and between the oblique surfaces 30,32 corresponds to the diameter of the electrode, whereby the four point guiding structure acts dynamically to hold the electrode by its side wall while the cutting edge machines the tip, to reduce the tendency of the electrode to walk laterally within the tool body 12. In short, the four point guiding structure provided at each longitudinal extremity of the tool 10 plays a dual role, namely as a static guide to direct the electrode toward the recessed cutting edge and also as a rotary electrode bearing engaging the lateral surface of the electrode in order to keep it stable during the machining operation.

The operation of the rotary tool 10 will be described with relation to Figures 9a to 9h. More particularly, Figure 9a illustrates a pair of welding electrodes 44 and 46 of a resistance welding machine. Note that the electrodes 44 and 46 are mounted to respective jaw members of a welding machine (not shown in the drawings) that form a clamp capable to bring in firm contact the electrodes against the workpieces to be spot-welded. In order to perform a dressing cycle the welding machine is programmed to bring the clamp in alignment with the tool 10 and to close the jaw members until the electrodes 44 and 46 are in contact with the respective cutting edges 34. The tool body 12 (while being held in the ring-shaped part of the drive assembly) is then rotated about a vertical axis to re-surface both the tip and the side face of each electrode. Side resurfacing is highly advantageous in situations where the electrode has mushroomed, as shown at 48 in order to restore the electrode to its original shape.

If the electrodes 44 and 46 are not perfectly in alignment with the tool 10 when brought in contact therewith, the oblique surfaces 30, 32 and 42 guide the electrodes toward the respective cutting edges 34 to ensure that the proper relationship tool/electrode is always maintained. In addition, the four point guide stabilizes the electrode during the machining operation, as described above.

During the simultaneous machining operation of both electrodes the metal chips and shavings from the upper electrode 44 enter under the effect of gravity the channels 39 and are discharged outside the tool 10. This continuous self-cleaning action reduces the possibility of clogging the working parts of the tool even after a large number of electrode dressing cycles.

It will be apparent from Figures 9E to 9H that the electrode pairs may have different shapes. This requires a blade 20 formed with cutting edges 34 having different configurations to suit the form of each electrode.

The above description of the preferred embodiments of the invention should not be interpreted in any limiting manner since refinements and variations are possible without departing from the spirit of the invention. The scope of the invention is defined in the annexed claims.

## Claims

1. a self-cleaning rotary tool for dressing welding electrodes, said rotary tool comprising:
- a tool body capable of rotation about a predetermined axis;
- a blade member mounted in said tool body for rotation therewith, said blade member including a cutting edge that upon rotation of said tool body is capable of machining a surface of a welding electrode in order to restore the electrode to a predetermined shape; and
- a continuous channel in said tool body extending from said cutting edge and opening at an extremity of said tool body for discharging under the effect of gravity metal chips produced during machining of the welding electrode, whereby allowing to perform multiple electrode dressing cycles without clogging said rotary tool with metal chips.

2. A rotary cutting tool as defined in claim 1, wherein said blade member includes a pair of cutting edges capable of dressing simultaneously a pair of welding electrodes in an opposed relationship.

3. A rotary cutting tool as defined in claim 1, wherein said tool body is generally cylindrical.

4. A rotary cutting tool as defined in claim 3, wherein said tool body includes a cavity extending along a longitudinal axis, thereof, said blade member being received in said cavity, said continuous channel being defined between said blade member and an inner wall of said cavity.

5. A rotary cutting tool as defined in claim 4, wherein said blade member is generally planar and extends along a longitudinal axis of said tool body, an extremity of said blade member adjacent a longitudinal end portion of said tool body constituting said cutting edge.

6. A rotary, cutting tool as defined in claim 5, wherein said cutting edge is recessed relative said longitudinal end portion.

7. A rotary cutting tool as defined in claim 6, wherein said tool body includes an inclined surface intermediate said longitudinal end portion and said cutting edge for guiding a welding electrode to be dressed toward said cutting edge.

8. A rotary cutting tool as defined in claim 4, wherein said blade member is generally planar and is mounted within said tool body and extends along a longitudinal axis thereof, said blade member having extremities adjacent to respective longitudinal end portions of said tool body, said extremities forming a pair of cutting edges for simultaneously dressing a pair of welding electrodes in an opposed relationship.

9. A self-cleaning rotary tool for dressing welding electrodes, said rotary tool comprising:
- a tool body having a hollow central portion, said tool body being capable of rotating about an upwardly extending axis;
- a blade member mounted within said hollow central portion for rotation with said tool body, said blade member having an extremity adjacent a longitudinal end portion of said tool body that forms a cutting edge for machining a face of a welding electrode in order to restore the electrode to a predetermined shape, said blade member defining with an internal wall of said tool body a continuous channel opening at longitudinal end portion of said tool body, said continuous channel allowing to discharge under the effect of gravity metal chips produced during machining of the welding electrode, whereby allowing to perform a plurality of electrode dressing cycles without clogging said rotary tool with metal chips.
